# EUROPEAN PATENT APPLICATION

(11) **EP 2 045 955 A1**
(43) Date of publication of application: **08.04.2009**
(21) Application number: 07721612.5
(22) Date of filing: 03.07.2007
(51) Int. Cl.: H04L 9/00

(54) **METHOD, DEVICE AND SYSTEM OF OBTAING NETWORK INFORMATION USING DEVICE AS SERVICE CREDENTIAL**

(30) Priority: 03.07.2006 CN 200610090377
(71) Applicant: Beijing Huaqi Information Digital Technology Co., Ltd., Beijing 100080 (CN)
(72) Inventor: GAO, Ji, Beijing 100080 (CN); XU, Zhongqiang, Beijing 100080 (CN); LI, Xuehua, Beijing 100080 (CN)
(74) Representative: Beck & Rössig European Patent Attorneys
(86) International application number: PCT/CN2007/002050
(87) International publication number: WO 2008/006294

(57) **Abstract**

Method, device and system of obtaining the network information using the device as the service credential, which use the device without power supply and display, in which presetting the configuration files containing the information connected to the network, after connecting the device with the online data process device, establishing the information interacting channel between the data process device and the information server to obtain, download the related information. The device as the service credential can be used to store the information, or display, print and output the special network service information by the data process device, and the device can be used as the service object of the special information network and take the voucher function of service.

## Description

### Field of the Invention

The invention relates to a method and a system of obtaining network information using a passive device without display, i.e. the method and system connecting said device as the service credential to a data processing apparatus to realize network connections in order to obtain service information. The present invention belongs to the computer network communication field.

### Background of the Invention

With the development of the Internet and communication technology, peoples are no longer satisfied to that computers are only used in Web-browsing or text & picture printing, but rather focus on the information in reference to their job characteristics and interests to manipulate various kinds of knowledge, thereof various characteristic information services such as the information of money stock, weather tour, as well as restaurant and entertainment is in rapid development.

There are two present methods for users to enjoy the service provided by the merchant stations by using the credential. One method is dependent on the VIP card provided by the merchant stations, wherein the VIP card only possesses visually appreciable service credential, and can not obtain the latest service dynamic information of the merchant stations at any moment. The other method is to obtain the service information of the merchant stations by using the network information, but in order to enjoy the services provided by the merchant stations, users must print out the service information provided by the merchant stations. Only with the printing paper containing the service information, users can enjoy the services in the merchant stations. This kind of service credential brings about prodigious inconvenience to users, who cannot enjoy the service provided by the merchant stations at any moment.

### Summary of the Invention

The method, device and system disclosed in the present invention of obtaining network information by using the device as the service credential, are used for solving the above problems by using the passive device without display. Based on the connection between said device in which configuration files containing the information for connecting to the network server are pre-set and online data processing apparatus, an information interacting channel is established between the data processing apparatus and the information server to obtain and download the related information.

The device as service credential can be used for storing information, or displaying and printing out specific network service information by data processing apparatus, wherein device used as the service object of the specific information network also has credential function to enjoy corresponding services.

In order to realize above purposes of the invention, the said method of obtaining network information by using device as service credential comprises the following steps:
(1) establish a connection between a data processing apparatus and a device as service credential connected to a network server;
(2) read the information of said network server and executing the request programs of network access and remote information service by the data processing apparatus;
(3) establish a connection and an information interacting channel between the data processing apparatus and the information server;
(4) obtain the information issued by the merchant stations in the information server by the data processing apparatus, and output the information by the data processing apparatus;
   transmit the requests of user information and operation content by the data processing apparatus;
(5) feed back the related information to the data processing apparatus via the information interacting channel by the information server according to the operation content if the request is validated, or feeds back error information and interrupt the operation if the request is not validated.

The following improved scheme will be adopted on the basis of the steps of said method:
the said device is connected to the data processing apparatus and the information interacting channel through the serial bus USB or IEEE 1394 bus;
furthermore, the said device can store auto-run files and the downloading by using a flash memory.
the said step (2) comprises the following execution steps:
   (2.1) directly supply power to said device by the data processing apparatus;
   (2.2) read the auto-run files in said device by the data processing apparatus;
   (2.3) execute the network access request in the auto-run files by the data processing apparatus;
   (2.4) send service request to an appointed information server of the auto-run files; and then establish a connection between the data processing apparatus and the information server if the information server responds.

In the said step (2.3), the network access request includes the means of broadband, dial, GPRS as well as the IP address of WAP identification and appointed information server.

In the said step (4), the user information comprising user's identity, authority, identification password for obtaining information and the corresponding operation content is immobilized in the auto-run files; wherein, the operation content comprises the network access request, the server website of the obtained information and the operation instructions.

In the said step (5), the information fed back to the data processing apparatus can be written directly into the storage medium of the said device, as well as be outputted by printing, fax or E-mail.

In the said step (5), the latest information updated or supplemented by users can be sent directly to the data processing apparatus, and be written into the storage medium of the said device to replace the originals by the data processing apparatus after the validation of the user information.

In the said step (5), the user information in the information server can be changed, or the user authority can be changed by the network manager after the validation of user information; In addition, the changed information fed back by the data processing apparatus will be written into the storage medium of said device to replace the originals.

Computer, PDA or mobile telephone can be used as the data processing apparatus in the said method for obtaining network information by using the device as service credential.

The said device as service credential of the present invention which is used for obtaining network information is a passive device without display, but comprises a storage medium and a memory control module. Wherein,

The said storage medium, includes application program module, configuration files module and memory module of information data;
the application program module stored in the storage medium is used to exchange information with its connective data processing apparatus;
auto-run files is solidified in the configuration files module, which points to the application program module when the data processing apparatus receive and execute the file, so as to exchange information between with the data processing apparatus and memory control module through the application program module.

The memory control module of the said device is provided with interface controller, the bus hub and the microprocessor all based on the standard of the serial bus of USB or the IEEE1394 bus.

Flash memory is used in said device.

Said auto-run files solidified in the configuration files module is configured with user's identity, authorization and verification password for obtaining the information, and the corresponding operation content.

Said configuration files module is the readable and writable memory module. To modify user information and user authority by the information server, and write the modified information back to the configuration files module by the data processing apparatus, to replace the originals for next validation.

As above, the advantages and benefits of the method, device and system of obtaining network information using the device as the service credential are obvious:
Automatic accessing network and obtaining information data of the connective information server through the connection between said device and data processing apparatus skip operations of connecting with the network and entering server IP address without any website and complicated computation.
The information obtained is limited to the users who passed the predetermined authentication, to provide the characteristic service and member certification system, so as to realize the information service which is used as a portability credential and being updated instantly.
The information obtained could be outputted as will as free and said device could be used as credential to enjoy the service in different area, to improve the dependence and fidelity of the users with said device to the network resources.
The information of the server and the network is uploaded to the data processing apparatus by the external storage medium, without any system resources occupancy of the data processing apparatus, but bring more casualness to users' operation.

### Brief Description of Drawings

FIG 1 is a flow diagram of the method of obtaining the network information issued by the merchant stations using the device as service credential;
FIG 2 is a diagram of the system of obtaining network information by using said device used as the service credential;
FIG 3 is the schematic diagram of the system of providing any discount information of the catering service of the present invention.

### Preferred Embodiments of the Invention

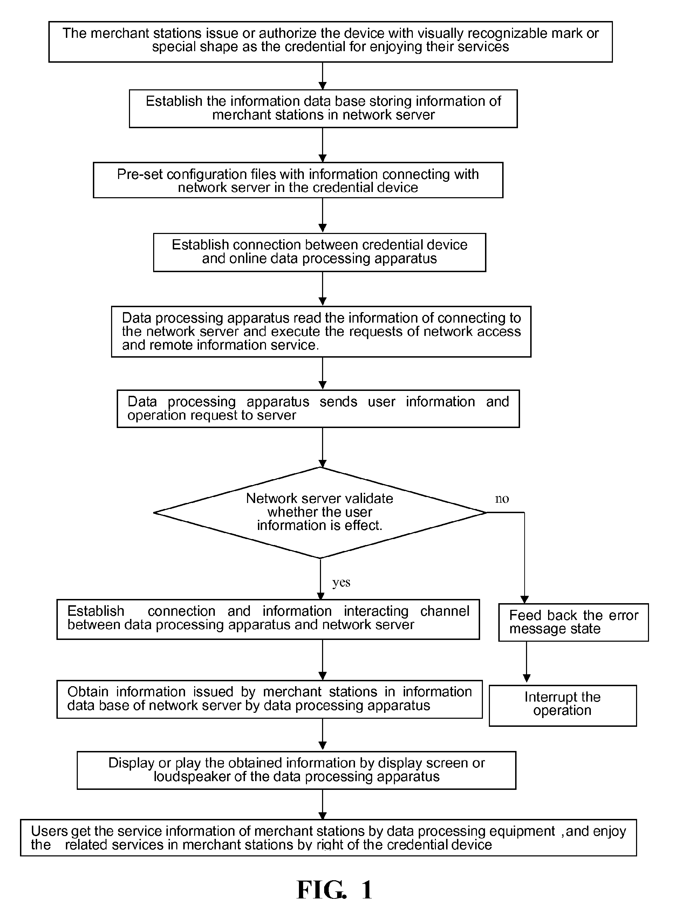

Embodiment 1, as shown in FIG 1, the detailed technical scheme of said method of obtaining network information using the device as the service credential is as follow:
(1) the merchant stations issue or certificate a device with visually recognizable mark or special shape as the credential for enjoying the services;
(2) establish an information database storing information of the merchant stations in the network server;
(3) preset the configuration files connected with the network server in the device used as credential;
(4) establish the connection between the device used as credential which is connected with the network server and the online data processing apparatus;
(5) data processing apparatus read the information of said network server and execute request programs of network access and remote information service by the data processing apparatus;
(6) establish a connection and an information interacting channel between the data processing apparatus and the information server;
(7) obtain the information issued by the merchant stations in the information server by the data processing apparatus, and outputting the information by display or loudspeaker the data processing apparatus.
(8)Users get the service information of the merchant stations by the data processing apparatus, and enjoy the corresponding service in the merchant stations due to the right of the said credential.
Wherein, said data processing apparatus is computer, PDA or mobile telephone.

The said credential may be an USB disk, memory card shaped as a butterfly and so on. Users may enjoy the service issued by the merchant stations in the network server due to the right of the credential with specific mark or shape.

Follow the steps below to establish the information data base storing information of the merchant stations in the said network server: The service information required by the merchant stations is summarized, and is uploaded by the network to the network server or the internet service providers'. Users can alternatively provide service information to the internet service provider either by fax or telephone, then the information will be processed and uploaded to the server by the internet service provider, to establish the information data base of the merchant stations.

The information preset and used to connect to the network server in said credential is as follow: said information may be an auto-run files preset in the credential containing the IP address of the network server, such as U disk.

The technical schemes which is to preset the auto-run files in USB disk and reading said auto-run files are the prior art without giving necessary details.

The said information even be an operation program preset in the USB disk, which contains the IP address of the network server. Whether said operation program do run or not is up to users, when said USB disk is connected to the data processing apparatus such as a computer. If said program is activated by users, the program will be ran by the computer in order to connect to the appointed network server.

The said information even be encryption information in the USB disk, while the program used to connect with server is installed in the computer. The computer to activate the program by reading said encryption information in the USB disk when the USB disk is connected to the computer.

The above-mentioned step (5) also includes: after sending user information and the operation request in the credential; On the premise of the request being passed, the related information will be fed back to the data processing apparatus by the interacting channel by the information server according to the operation; Otherwise, error message will be fed back to interrupt operation.

The said user information comprising user's identity, authority, identification password for obtaining information, and the corresponding operation content is immobilized in the auto-run files; wherein, the operation content comprises the network access request, the server website of the obtained information and the operation instructions.

It is included in the above step (4): the method of directly supplying power to the credential by the data processing apparatus.

The said access request to the network includes the means of broadband, dial identification and going access to the IP address of appointed information server.

The device used as the service credential in this embodiment, is the USB disk with the serial bus USB interface and the flash memory.

Connect the USB disk to the online data processing apparatus, such as computer, to gain access to the network and obtain remote information, it is preferred that automatic connecting with the network to obtain the network information in this embodiment. The said USB disk includes the flash memory and the memory control module.

The said flash memory is configured with application program module, configuration files module and memory module. Wherein, the application program module is used for information interacting with computer or mobile telephone; The auto-run files are solidified in configuration files module, to transmit user information and operation content and point to the application program module. The said memory control module, is provided with interface controller based on serial buses USB standard, bus hub and microprocessor. The said auto-run files, is previously configured with user identity, authorization, verification password used to obtain informational, and operation content. The said operation content contains request of connecting with network, the server website of information obtained and operation instructions. The request of gaining access to the network is by means of broadband or dials when the USB disk is connected to the computer.

Any more, auto-run instruction pointing to application program module is written in said auto-run files. In operating system of Windows 9x / ME / 2000 / XP, auto-run files is autorun.inf. Program instructions preset contains:

```
     [AutoRun]
     ...,
     open = specific directory path \ pointed application program filename,
     ...,
```

Wherein, command line "open" point to application program module to activate the information interactive operation established by memory control module with data processing apparatus, when autorun.inf is received and executed by the data processing apparatus. Meanwhile, application program is previously preset and written into flash memory; furthermore the title and full path to save are preset in auto-run files autorun.inf The said method of obtaining information includes the following operation steps: (1) After USB disk is connected to the USB interface of the computer and identified by the computer, information interacting channel in established based on USB bus hub.

(2) After receiving auto-run files autorun.inf by the computer, executive program of automatic gaining access to the network and remote information service is realized; if information server responses, valid data is fed back and an interface is opened by network access apparatus for data processing apparatus, to notify data processing apparatus that the preparation for access the network is all ready. (3) Establish the connection and the interacting channel between data processing apparatus and information server. (4) Request of operation and user information including user identity, authorization and verification password used to obtain informational is sent by computer.

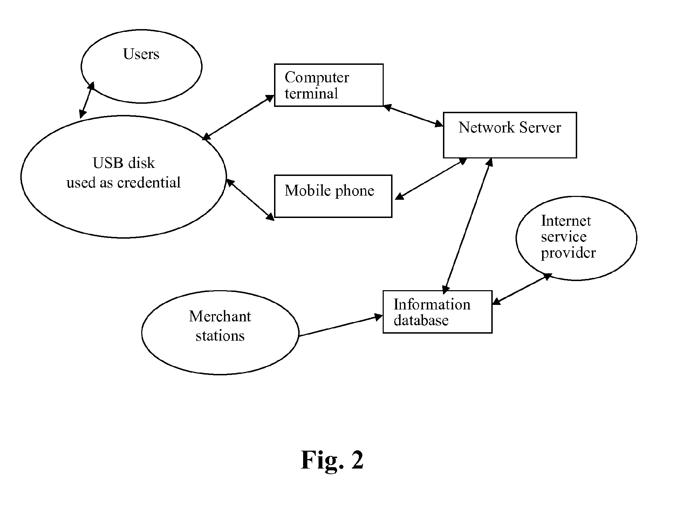

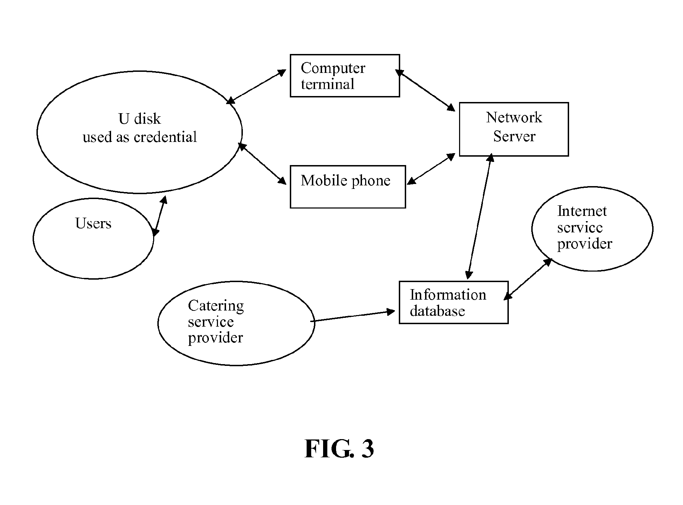

User information is checked by server gateway so as to feed back information of error state and interrupt all operation of obtaining information if there is any error. (5) Under the allowance of the validation of user information, the specific information will be fed back to the data processing apparatus according to the appointed operation instructions of operation content by the server; The said application system method and device of using the device as the service credential to obtain network information in the present invention as shown in FIG 2: comparing the device used as service credential, data processing apparatus, server gateway and information data base; Data processing apparatus such as computer or PDA obtain information from the connected network server through the device used as service credential, that is to say, computer or PDA link to corresponding information data base through server gateway, to obtain corresponding service information of merchant stations, users can get the up-to-date service information of merchant stations by display of computer or PDA, mobile telephone, and enjoy corresponding service in the merchant stations due to the right of the device used as service credential. Visually appreciable distinctive mark is mounted on the crust of the device such as USB disk, memory card used as service credential, either said crust may be made into specific shape, and the said visually appreciable distinctive mark or specific shape is the mark by which users could enjoy the service provided by the merchant stations. At the same time, said device is equipped with interface connected with data processing system and the memory used to store information of connecting with network server. Plenty of service information of the merchant stations is stored in the information data base of the network server, and it is used for users to obtain. Merchant stations send their own service information to the server database which could build network connections in data processing apparatus such as computer or PDA, mobile telephone to build network connections; or merchant stations place their own service information in information data base of the network server of the internet service provider through special internet service provider. The device with visually distinctive mark or specific shape used as service credential is recognized by the merchant stations, users can enjoy the service issued in network server by the merchant stations in merchant stations due to the right of specific mark or specific shape of the device. The data processing apparatus such as computer or PDA, mobile telephone etc is connected to the corresponding network such as internet or mobile communication net and read the information in the device used as service credential after being connected with the data processing apparatus. The data processing apparatus is connected with corresponding network server in accordance with the information to obtain the service information in network server issued by the merchant stations. Users could be aware of that they could enjoy the service of the merchant stations and what kind of service they could enjoy due to the right of the device used as service credential, by using the display of the data processing apparatus. After the device such as USB disk used as service credential being connected into computer, computer will read information of connecting with network server preinstalled in USB disk, and computer can be connected with the corresponding network server in accordance with the said information. The information could be an auto-run program preset in USB disk; the auto-run program contains the IP address of network server. Auto-run program being preset in USB disk and being read by computer is prior art no more state here. The information can also be an operation program preset in USB disk; the program contains the IP address of network server. After the USB disk is being connected to the computer, users can choose whether to run the program and computer will run the program and connect with the appointed network server if users activate the program. The information can also be enciphered message stored in USB disk, while the program being connected with server is installed in computer, the program in computer only be started when USB disk is being connected to computer by which the computer read the enciphered message in USB disk. It can adopt the following scheme as shown in FIG. 3 to apply present invention to information service system providing foodservice discount: Network service provider obtains up-to-date discount information from restaurants, and put it into server in time. The restaurants also could send discount information to network service provider by fax or telephone and so on, as well as network with identity authentication. Network service provider classifies the received discount information, and input into server in certain rule. Network service provider could real-timely update discount information, and classify the information according to the locality of restaurant; it is convenient for users to search.

Aforesaid client terminal program and application module used to run the said client terminal program is installed in the device purchased by users for service credential such as USB disk. Configuration files in client terminal program contain network domain name or network address relating to foodservice, as well as identity authentication information. Users only need to connect credential with client terminal connected with server, especially computer connected with international internet when they want the update information of foodservice discount, and the program in credential will automatically or manually run. Program send operation request to server managed by network service provider, and the information required by users will be fed back to client terminal by the server. Returned information could be tackled by client terminal program, or be shown in client terminal display, either prompt user by phonetic mode.

Users can customize own individuation information by right of presence of users identity authentication mechanism. Server will feed back corresponding information to users in accordance with users' requirement such as flavor, grade, locality, period of discount, special restaurant, after server recognizing users. The device held by users used as service credential can be designed as distinctive appearance, such as pen type, card form, and be used as the credential for obtaining corresponding service. Applying the present invention to the system of foodservice corrugated information service, could establish information communicate channel between consumer and restaurant operator, on the one hand that the restaurant operator could issue immunity measure in time in accordance with the change of requirement, and reduce the cost for advertisement; on the other hand that the consumer with no any knowledge of computer operation can obtain the latest foodservice buckling information conveniently. The present invention can also be used for other information issue system requiring fast update, users need no any computer operation skill, it is convenient and rapid, and the client group can be improved for the operator, the availability effect is obvious. The embodiment hereinbefore described in accordance with the figures is the preferred one to realize the purpose of present invention. The motivation has been provided to the Ordinary Skilled in This Art to deduce other substituted technical schemes which is in the protection scope of the claims.

## Claims

1. A method of obtaining network information using a device as service credential comprising the following steps:
(1) establishing a connection between a data processing apparatus and the device configured with network server information and used as service credential,
(2) the data processing apparatus reading the information of connecting to the network server and executing a request of accessing the network and remote information tele-service,
(3) establishing a connection and information interacting channel between the data processing apparatus and the information server,
(4) obtaining and outputting information in the information server issued by merchant stations through the data processing apparatus, wherein the request of user information and operation content is sent via the data processing apparatus,
(5) feeding back the related information to the data processing apparatus through the information interacting channel by the information server according to the operation content if the request is validated, otherwise, feeding back error information and interrupt the operation if the request is not validated.

2. The method of obtaining network information using the device as the service credential according to the claim 1, **characterized in that:** the above-mentioned step (2) comprises the following executed process:
(2.1) the data processing apparatus supplying power directly to the device,
(2.2) the auto-run files in the said device are being read by the data processing apparatus,
(2.3) the network access request of the auto-run files is executed by the data processing apparatus,
(2.4) a service request is sent to the information server which is appointed in the auto-run files and establishes a connection between the data processing apparatus and the information server if the information server responds.

3. The method of obtaining network information using the device as service credential according to the claim 2, **characterized in that** in the above-mentioned step (2.3) the network access request includes the means of broadband, dialing, GPRS and WAP authentication and IP address of appointed information server.

4. The method of obtaining network information using the device as the service credential according to the claim 3, **characterized in that** in step (4) the user information includes user identity, authorization and a verification password of obtaining information as well as operation content corresponding to user information solidified in auto-run files, wherein operation content includes a network access request, a server website used to obtain information and operation instructions.

5. The method of obtaining network information using the device as service credential according to the claim 4, **characterized in that** in step (5) the information feed back to the data processing apparatus can be written directly into the storage medium of said device, or be exported by printing, facsimile or electronic mail.

6. The method of obtaining network information using the device as service credential according to the claim 5, **characterized in that** the data processing apparatus is a computer, PDA or mobile telephone.

7. A device obtaining network information and used as service credential is a passive device without display and is configured with a storage medium and a memory control module,
**characterized in that:**
the storage medium includes an application program module, a configuration files module and a memory module of information data,
the application program module stored in the storage medium is adapted to exchange information between the connective data processing apparatus and the storage medium,
auto-run files are solidified in the configuration files module,
wherein the application program module is adressed when the data processing apparatus receives and executes the auto-run files, and the information interactive operation is executed between the application program module and the data processing apparatus via the memory control module.

8. The device used as service credential for obtaining network information according to the claim 7, **characterized in that** the memory control module of said device is provided with an interface controller based on serial buses USB or IEEE1394 bus standard, bus hub and microprocessor.

9. The device used as service credential for obtaining network information according to the claim 8, **characterized in that** the said device adopts flash memory medium.

10. The device used as service credential for obtaining network information according to the claim 9, **characterized in that** the auto-run files solidified in the configuration files module are configured with a user identity, authorization and a verification password for obtaining information, and the operation content corresponding to user information;
wherein the configuration files module is a readable and rewritable memory module.
